# DEMANDE DE BREVET EUROPEEN

(11) **EP 4 682 093 A2**
(43) Date de publication de la demande: **21.01.2026**
(21) Numéro de dépôt: 25221327.7
(22) Date de dépôt: 23.11.2021
(51) Int. Cl.: B65G 47/26

(54) **DISPOSITIF ET PROCEDE DE TRAITEMENT DE PRODUITS**

(30) Priorité: 24.11.2020 FR 2012045
(62) Demande divisionnaire de: 21816432.5
(71) Demandeur: Sidel Participations, 76930 Octeville-sur-Mer (FR)
(72) Inventeur: GARNIER, Thierry, 76930 OCTEVILLE-SUR-MER (FR); DE LESCURE, Adrien, 76930 OCTEVILLE-SUR-MER (FR); CLEMENT, Serge, 76930 OCTEVILLE-SUR-MER (FR); MOREAU, Sylvain, 76930 OCTEVILLE-SUR-MER (FR); CHEVET, Corentin, 76930 OCTEVILLE-SUR-MER (FR)
(74) Mandataire: Sidel Group

(57) **Abrégé**

La présente invention concerne un dispositif (1) de traitement de produits, comprenant un outil (2) et un support (3) déplaçable dudit outil (2) de traitement des produits ; chaque support (3) étant monté en coulissement le long dudit rail (4) et comprenant un bloqueur (5) actionnable depuis en verrouillage ; un actionneur (6) en verrouillage et en déverrouillage du bloqueur (5) ; une alimentation (7) en énergie dudit actionneur (6) ; au moins un organe (8) d'accouplement avec ledit support (3) ; une motorisation (9) relative et indexée entre ledit organe (8) et ledit un support (3) ; caractérisé en ce que ledit organe (8) embarque ledit actionneur (6), permettant d'alimenter en énergie ledit bloqueur (5).

L'invention concerne aussi un procédé de traitement correspondant.

## Description

La présente invention entre dans le domaine du traitement de produits au sein d'une ligne industrielle de production, ledit traitement étant opéré par un dispositif dédié. Plus avant, ledit dispositif de traitement se veut à même d'effectuer un traitement de plusieurs formats de produits. Pour ce faire, un tel dispositif comprend plusieurs outils montés sur des supports prévus mobiles entre plusieurs positions réglables, en fonction de caractéristiques liées aux produits à traiter, comme leur format ou leur nombre.

Au sens de la présente invention, le terme « traitement » consiste en une prise en charge de produits, en vue d'opérer un changement de configuration sur chacun ou à l'ensemble des produits pris en charge. A titre d'exemples non limitatifs, un tel traitement peut comprendre le formage par pliage de conteneur à partir d'une découpe cartonnée, ou la préhension de récipients en vue de leur encaissage ou décaissage, ou bien le réglage de la largeur des couloirs d'un convoyeur transportant lesdits produits, ou bien encore le réglage de l'espacement entre deux convoyeurs, ou bien encore le réglage du positionnement d'un outil destiné à l'application d'un adhésif sur une paroi desdits produits.

Dès lors, au sens de la présente invention, le terme « produit » englobe aussi bien un récipient, comme une bouteille, qu'un conteneur, comme une caisse cartonnée, ou bien encore une découpe à former en un tel conteneur.

Actuellement, pour des questions de modularité, une ligne industrielle de production doit être à même de s'adapter en fonction de caractéristiques liées aux produits à traiter, comme différents formats de produits, le nombre et/ou la configuration desdits produits.

Par exemple, dans le cas d'un traitement d'encaissage, le format de la caisse dépend du format et du nombre de produits à y introduire ; il convient donc d'adapter les positions des outils mis en œuvre pour le formage d'une telle caisse, ainsi que les outils destinés à assurer l'encaissage des produits. En effet, l'encaissage de six produits d'un format ne nécessite pas la même caisse et les mêmes espacements entre les outils de préhension, que pour l'encaissage de 12 produits d'un autre format, notamment plus petit.

En outre, la modularité du traitement peut aussi dépendre de la cadence de production imposée par un poste situé en amont ou en aval le long de la ligne de production, ainsi que de l'approvisionnement d'un tel poste, comme par exemple un approvisionnement selon un flux unifilaire, plurifilaire ou en vrac, avec des intervalles déterminés entre les produits.

Dans la suite, pour des raisons de simplification, les caractéristiques liées au produits et les contraintes de la ligne de production seront englobées sous le terme « format ». Dans ce contexte, il existe des dispositifs de traitement comprenant plusieurs outils montés sur des supports prévus déplaçables de façon réglable entre plusieurs positions. Lors d'un changement de production, on opère des déplacements des supports depuis une position initiale des outils pour le traitement d'un format de produits, vers une position finale desdits outils en vue du traitement d'un autre format de produits. Une fois en position finale, les supports sont verrouillés durant la durée de la production, jusqu'au prochain changement de format, où lesdits supports seront déverrouillés en vue de nouveaux déplacements.

Actuellement, le verrouillage et le déverrouillage des supports s'opère par l'intermédiaire de bloqueurs, le plus souvent de type pneumatique, comme un vérin, mais aussi de type électrique ou encore de type électromagnétique. En outre, l'alimentation pneumatique est complexe à mettre en œuvre, nécessitant un circuit avec des raccords hermétiques et une mise en place et une canalisation difficiles des tuyaux pneumatiques.

Un dispositif connu comprend plusieurs supports montés déplaçables en coulissement le long d'un rail de guidage, les supports étant alignés les uns à la suite des autres. Les supports peuvent alors être déplacés longitudinalement vers l'une ou l'autre de l'extrémité dudit rail, lorsqu'ils ne sont pas en verrouillage.

A ce titre, le verrouillage et le déverrouillage des supports s'opère par appui des bloqueurs contre ledit rail. Pour ce faire, chaque support est équipé d'un bloqueur qui lui est propre. Afin de verrouiller ou déverrouiller le bloqueur, chaque support comprend aussi un actionneur. Chaque actionneur de chaque support est donc connecté de façon indépendante à une source d'alimentation, dont la commande fournit ou non l'énergie à l'actionneur pour induire l'actionnement dudit bloqueur en verrouillage ou en déverrouillage.

En outre, en fonction de la commande de l'alimentation, le verrouillage d'un support peut s'effectuer en alimentant en énergie son actionneur, tandis que le déverrouillage est opéré en coupant l'alimentation en énergie, ou inversement.

D'ores et déjà, au sein d'un même dispositif, les nombreuses liaisons des alimentations prévues distinctes pour chaque actionneur de chaque support, rend complexe et coûteuse la conception dudit dispositif et la mise en place de telles liaisons, ainsi que toute intervention lors d'une maintenance.

Plus avant, en vue d'effectuer les déplacements des supports entre les positions initiales et finales, il est nécessaire de motoriser de façon indexée leur déplacement. Encore une fois, l'adjonction d'une motorisation propre à chaque support complexifie grandement la conception et la fabrication du dispositif de traitement.

Il a donc été imaginé de mutualiser la motorisation du déplacement des supports, au travers d'une prise en charge successive de chacun des supports à déplacer. Pour ce faire, le dispositif est pourvu d'un chariot mobile, pourvu d'une motorisation indexée. Un tel chariot évolue parallèlement au déplacement des supports le long dudit rail.

De plus, un tel chariot comprend un organe prévu pour un accouplement avec chaque support. Le chariot est donc déplacé en vis-à-vis d'un support situé en position initiale, puis l'organe est accouplé avec ledit support. Une fois l'organe en accouplement, le bloqueur du support est déverrouillé par son actionneur, puis ledit support peut être déplacé sous l'action de la motorisation indexée dudit chariot jusqu'à la position finale. En position finale, l'actionneur assure le verrouillage du support, puis l'organe est désaccouplé. Le chariot peut alors être déplacé en vue de prendre en charge un autre support. En somme, le changement de positions d'un support est effectué par un accouplement temporaire avec un organe, selon la distance de déplacement requise entre lesdites positions.

On comprend alors la nécessité de coordonner la prise en charge de chaque support par le chariot, l'accouplement de l'organe et la commande de l'actionneur pour le déverrouillage du bloqueur, afin d'autoriser le déplacement le long dudit rail depuis la position initiale jusqu'à la position finale, où le verrouillage dudit support est alors effectué. Une telle tâche doit être respectée avec précision, complexifiant la mise en œuvre du dispositif de traitement lors du changement de format des produits à traiter. L'invention a pour but de pallier les inconvénients de l'état de la technique en proposant un dispositif de traitement de produits, dont le verrouillage et le déverrouillage des supports s'effectue par une alimentation externe, mutualisée pour plusieurs supports. En somme, l'invention prévoit de déporter l'alimentation en énergie vers un actionneur commun, rendant passif le bloqueur de chaque support. Le bloqueur de chaque support devient alors esclave dudit actionneur, agissant en tant que maître, que ce soit pour l'alimentation en énergie dudit bloqueur ou pour le déplacement du support correspondant.

En effet, l'invention envisage un actionneur commun prévu mobile et qui intègre la motorisation indexée induisant le déplacement de chaque support, une fois accouplé et en déverrouillage.

Ainsi, l'invention permet de simplifier considérablement l'alimentation en énergie en la canalisant au travers de l'actionneur mobile, venant successivement prendre en charge chaque support et alimenter chaque bloqueur les uns après les autres.

Pour ce faire, le dispositif de traitement comprend
- au moins un outil et au moins un support déplaçable, ledit outil étant monté sur ledit support et ledit au moins un outil est dédié audit traitement desdits produits ;
- au moins un rail, chaque support étant monté en coulissement le long dudit rail entre plusieurs positions ;
chaque support comprenant un bloqueur en une des positions, ledit bloqueur étant actionnable depuis un verrouillage dudit support en appui contre ledit rail vers un déverrouillage autorisant le déplacement dudit support le long dudit rail, et inversement ;
- un actionneur en verrouillage et en déverrouillage du bloqueur dudit au moins un support ;
- une alimentation en énergie dudit actionneur ;
ledit dispositif de traitement comprenant encore
- au moins un organe d'accouplement avec ledit au moins un support ;
- une motorisation relative entre ledit organe et ledit au moins un support, ladite motorisation étant prévue indexée par rapport audit rail.

Un tel dispositif de traitement se caractérise en ce que ledit organe embarque ledit actionneur, permettant d'alimenter en énergie ledit bloqueur.

Selon des caractéristiques additionnelles, non limitatives, un tel dispositif de traitement peut comprendre
- un guide s'étendant parallèlement audit rail ;
- ledit organe étant prévu mobile le long dudit guide sous l'action de ladite motorisation.

Ledit dispositif de traitement peut comprendre
- une structure et un longeron ;
- ledit rail est monté mobile par rapport audit longeron de ladite structure sous l'action de ladite motorisation assurant le déplacement dudit rail ;
   et avantageusement
- ledit organe est monté fixe sur ladite structure.

Ledit organe peut comprendre au moins un pion d'accouplement, ledit pion étant mobile depuis une configuration escamotée vers une position déployée, et inversement ;
- ledit support comprend au moins un orifice d'accouplement, ledit orifice étant conformé complémentairement audit pion ;
- en position déployée, ledit pion coopérant avec ledit orifice en accouplement dudit organe avec ledit support.

Ledit organe peut comprendre une connectique reliée à ladite alimentation ;
tandis que ledit support comprend une connectique complémentaire reliée audit bloqueur ; pour qu'en position d'accouplement, la connectique est reliée à ladite connectique complémentaire, ladite alimentation étant alors reliée audit bloqueur.

Ledit pion peut être conformé de façon conique, assurant le centrage par rapport aux parois internes dudit orifice lors de l'accouplement.

Ledit pion peut comprendre ladite connectique et ledit orifice comprend ladite connectique complémentaire.

Ledit au moins un outil peut être un poinçon, ledit dispositif de traitement assurant le formage à partir d'une feuille cartonnée desdits produits de type conteneur.

Ledit au moins un outil peut être un moyen de préhension des produits de type récipient, ledit dispositif de traitement assurant le transfert, l'encaissage ou le décaissage desdits produits.

Ledit au moins un outil peut être un moyen de préhension de conteneurs par maintien en appui par dépression contre une paroi de chacun desdits conteneurs, ledit dispositif de traitement assurant le convoyage desdits conteneurs.

Ledit au moins un outil peut être un convoyeur, ledit dispositif de traitement assurant le convoyage desdits produits.

Ledit au moins un outil peut être une paroi de couloir, ledit dispositif de traitement assurant le convoyage en couloirs desdits produits de type récipient ou de type conteneur.

L'invention concerne encore un procédé de traitement de produits. Un tel procédé est préférentiellement destiné à la mise en œuvre du dispositif de traitement selon l'invention.

En outre, l'invention prévoit un fonctionnement spécifique, du fait de la centralisation au niveau dudit organe mobile de l'alimentation des bloqueurs des supports. En particulier, la prise en charge d'un support par l'organe mobile nécessite une phase d'accouplement particulière, du fait que le support est en verrouillage au moment dudit accouplement.

Pour ce faire, dans un tel procédé de traitement, successivement :
- on effectue un déplacement longitudinal de façon relative entre un organe et un support d'un outil dédié audit traitement desdits produits, en effectuant un positionnement en alignement transversal entre ledit organe et ledit support ;
- on effectue un accouplement dudit organe avec ledit support ;
- on effectue un actionnement depuis ledit organe du déverrouillage d'un bloqueur dudit support, ledit support étant situé en une position initiale le long d'un rail ;
- en accouplement, on effectue un déplacement de façon indexée dudit support en coulissement le long dudit rail depuis ladite position initiale vers une position finale ;
- en position finale, on effectue l'actionnement du verrouillage dudit bloqueur depuis ledit organe ;
- on désaccouple ledit organe.

Selon des caractéristiques additionnelles, non limitatives, lors d'un tel procédé de traitement, en accouplement, on peut contrôler l'actionnement du verrouillage et du déverrouillage dudit bloqueur par alimentation depuis ledit organe.

Au moment de l'accouplement, on peut rendre libre ledit positionnement dudit organe par rapport audit support, ou inversement ;
- puis après l'accouplement, on contrôle ledit déplacement dudit organe solidaire dudit support, ou inversement.

Le positionnement en alignement transversal entre ledit organe et ledit support peut s'effectuer par détection d'au moins un récepteur monté sur ledit support.

Au cours du positionnement, on peut déplacer ledit rail par rapport audit organe fixe. Au cours du positionnement, on peut déplacer ledit organe par rapport audit rail fixe. D'autres caractéristiques et avantages de l'invention ressortiront de la description détaillée qui va suivre des modes de réalisation non limitatifs de l'invention, en référence aux figures annexées, dans lesquelles :
La figure 1 représente schématiquement une vue en perspective d'un mode de réalisation d'un dispositif de traitement destiné au formage par pliage de conteneurs à partir de découpes cartonnées, montrant notamment de chaque côté plusieurs outils de type poinçons montés sur des supports déplaçables le long de deux rails, tandis qu'un seul organe est monté mobile le long d'un guide ;
La figure 2 représente schématiquement une vue en élévation de la figure 1, montrant notamment la direction longitudinale des déplacements des supports le long des rails, ainsi que le déplacement desdits organe le long de leur guide respectif ;
La figure 3 représente schématiquement une vue en perspective d'un détail de la figure 1, montrant notamment un support en verrouillage sur son rail et en vis-à-vis un organe en position désaccouplée ;
La figure 4 représente schématiquement une vue en perspective d'un mode de réalisation d'un dispositif de traitement destiné à la préhension de conteneurs par appui en dépression contre leur paroi latérale, montrant notamment d'un côté plusieurs outils de type ventouses montés sur des supports déplaçables le long de rails montés sur un longeron mobile par rapport à la structure, tandis qu'un seul organe est fixe sur ladite structure ;
La figure 5 représente schématiquement une vue simplifiée d'un premier mode de réalisation, montrant notamment deux supports déplaçables en position verrouillée le long d'un rail, tandis qu'un organe est mobile le long de son guide avec une motorisation indexée, mettant en évidence certains déplacements des différents éléments ;
La figure 6 représente schématiquement une vue similaire à la figure 5 d'un deuxième mode de réalisation, montrant notamment deux supports déplaçables en position verrouillée le long d'un rail mobile le long d'un longeron avec une motorisation indexée, tandis qu'un organe est fixe par rapport mobile le long de son guide ;
La figure 7 représente schématiquement une vue similaire à la figure 5 d'un troisième mode de réalisation, montrant notamment un organe pourvu d'une connectique assurant l'alimentation du bloqueur du support en position accouplée ;
La figure 8 représente schématiquement une vue d'un détail de la figure 7 dans une première position, montrant notamment le déplacement de l'organe sous l'action de la motorisation indexée ;
La figure 9 représente schématiquement une vue similaire à la figure 8 dans une deuxième position, montrant notamment l'arrêt dudit organe en vis-à-vis d'un support par détection dudit support ;
La figure 10 représente schématiquement une vue similaire à la figure 8 dans une troisième position, montrant notamment l'accouplement de l'organe avec le support avec une liberté de mouvement dudit organe le long de son guide ;
La figure 11 représente schématiquement une vue similaire à la figure 8 dans une quatrième position, montrant notamment en accouplement l'alimentation du bloqueur du support et son déverrouillage ;
La figure 12 représente schématiquement une vue similaire à la figure 8 dans une cinquième position, montrant notamment le déplacement dudit organe en accouplement avec ledit support sous l'action de la motorisation indexée ; et
La figure 13 représente schématiquement une vue similaire à la figure 8 dans une sixième position, montrant notamment le verrouillage dudit bloqueur et le désaccouplement dudit organe.

La présente invention concerne le traitement de produits au sein d'une ligne industrielle de production, ledit traitement étant opéré par un dispositif dédié.

Un tel traitement consiste en une prise en charge de produits, en vue d'opérer un changement de configuration sur chacun ou à l'ensemble des produits pris en charge. A titre d'exemples non limitatifs, un tel traitement peut comprendre le formage par pliage de conteneur à partir d'une découpe cartonnée, ou la préhension de conteneurs ou encore de récipients en vue de leur encaissage ou décaissage, ou bien le réglage de la largeur des couloirs d'un convoyeur transportant lesdits produits, ou bien encore le réglage de l'espacement entre deux convoyeurs, ou bien encore le réglage du positionnement d'un outil destiné à l'application d'un adhésif sur une paroi desdits produits.

Ce traitement se veut adaptable à différents formats liés à la production, en fonction de caractéristiques liées aux produits à traiter, comme leur forme ou leur nombre, ci-après globalement désigné sous le terme « format ». En somme, lors d'un changement entre un premier et un second format de production, certains éléments doivent être repositionnés pour correspondre au second format de produits à traiter.

A cet effet, l'invention concerne d'abord un dispositif 1 de traitement de produits, ci-après « dispositif 1 ».

Un tel dispositif 1 comprend au moins un outil 2, de préférence plusieurs outils 2. Comme évoqué précédemment, l'outil 2 est dédié au traitement à appliquer aux produits. De façon non limitative, ledit outil 2 peut être :
- un poinçon, ledit dispositif 1 assurant alors le formage à partir d'une feuille cartonnée desdits produits de type conteneur ;
- un moyen de préhension des produits de type récipient, ledit dispositif 1 assurant le transfert, l'encaissage ou le décaissage desdits produits ; ledit moyen de préhension peut comprendre des tulipes ;
- un moyen de préhension de conteneurs par maintien en appui par dépression contre une paroi de chacun desdits conteneurs, ledit dispositif 1 assurant le convoyage desdits conteneurs ; ledit moyen de préhension peut comprendre des ventouses ;
- un convoyeur, ledit dispositif 1 assurant le convoyage desdits produits ; ou bien
- une paroi de couloir, ledit dispositif 1 assurant le convoyage en couloirs desdits produits de type récipient ou de type conteneur.

Le dispositif 1 comprend encore au moins un support 3. Ledit outil 2 est monté sur ledit support 3. En outre, un ou plusieurs outils 2 peuvent être montés sur un même support 3. En somme, un outil 2 est solidaire de son support 3, fixé de façon démontable, afin de pouvoir changer d'outil 2 si besoin, en fonction d'un format spécifique de produits à traiter, pour maintenance ou remplacement.

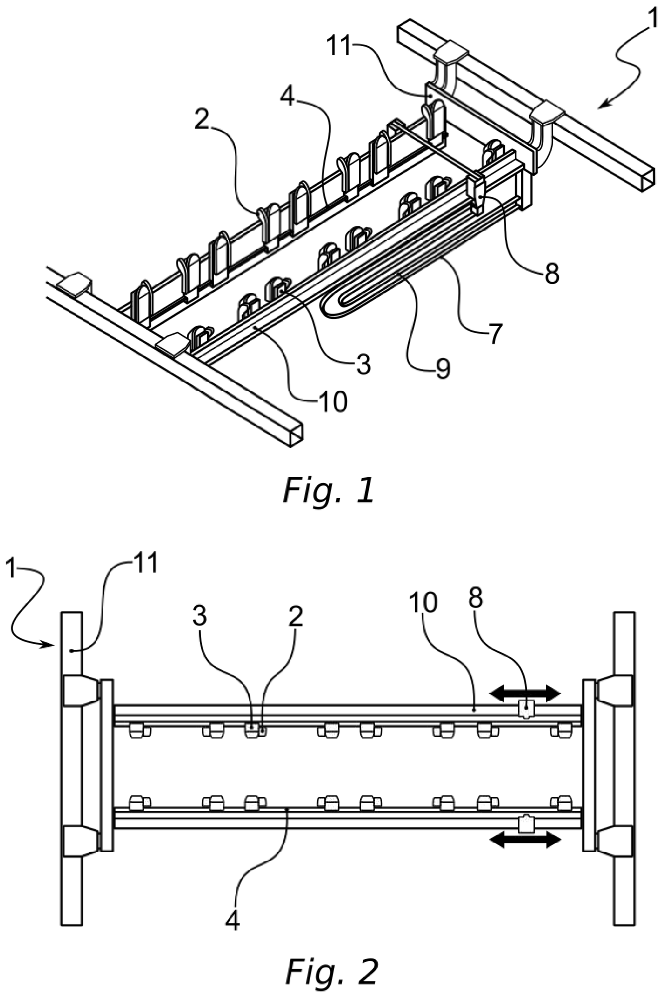

Selon le mode de réalisation visible sur la figure 1, un support 3 reçoit deux outils 2 sous forme de poinçons, destinés à assurer une partie du formage de conteneur à partir d'une découpe cartonnée. Plusieurs poinçons sont nécessaires pour plier chaque plaque pour former une caisse cartonnée, lesdits poinçons étant espacés de façon précise par rapport aux dimensions de la plaque et de la caisse à former.

Dès lors, le support 3 est prévu déplaçable. Lors d'un changement de format de production, chaque support 3 peut donc être déplacé pour ajuster la distance entre les outils 2.

Pour ce faire, le dispositif 1 comprend au moins un rail 4. Selon le mode de réalisation visible sur les figures 1 et 2, le dispositif 1 comprend une paire de rails 4, disposés parallèlement.

De plus, chaque support 3 est monté en coulissement le long d'un rail 4 entre plusieurs positions. Un support 3 peut donc être déplacé le long de son rail 4 sur lequel il glisse longitudinalement.

A ce titre, dans le cadre de la présente invention, sans autre précision, le terme « longitudinal » s'entend par rapport à la direction de coulissement le long dudit rail 4.

Dès lors, sans autre précision, le terme « transversal » correspond à une direction orthogonale à ladite direction de coulissement, dans un même plan, préférentiellement selon un plan horizontal ou sensiblement horizontal, notamment comprenant ledit rail 4.

Un support 3 peut donc être déplacé longitudinalement le long dudit rail 4 et positionné à un emplacement dans une position sur ce rail 4. Le support 3 peut s'apparenter à un chariot monté sur ledit rail 4. Un tel chariot peut être prévu roulant par l'intermédiaire de moyens de roulement adaptés, ou bien glissant par l'intermédiaire d'une surface de moindre friction adaptée. Un tel chariot peut notamment être rapporté par emboîtement sur ledit rail 4, l'un et l'autre présentant alors des formes complémentaires.

Plus avant, chaque support 3 comprend un bloqueur 5 en une des positions. Ce bloqueur 5 est actionnable depuis un verrouillage dudit support 3 en appui contre ledit rail 4 vers un déverrouillage autorisant le déplacement dudit support 3 le long dudit rail, et inversement. En somme, le bloqueur 5 peut être actionné pour bloquer le support 3 dans une position précise le long du rail 4 et débloqué pour déplacer ledit support 3 le long dudit rail 4. En déverrouillage, le support 3 possède donc une liberté de mouvement longitudinale, tandis qu'il ne peut pas être déplacé en verrouillage, alors fixé audit rail 4.

Selon un mode de réalisation, ledit bloqueur 5 peut comprendre une partie mobile venant en appui contre au moins une surface dudit rail 4, la force d'appui appliquée assurant une résistance empêchant le coulissement dudit support 3. En somme, le bloqueur 5 peut être déployé pour assurer le verrouillage du support 3 contre le rail 4 et, inversement rétracté assurant alors le déverrouillage dudit support 3.

Selon différents modes de réalisation, le bloqueur 5 peut être de type mécanique, électrique, hydraulique, pneumatique, magnétique ou électromagnétique. Préférentiellement, le bloqueur 5 est de type pneumatique, s'apparentant alors à un vérin. Un tel bloqueur 5 pneumatique peut être alimenté par un fluide sous pression, notamment par de l'air comprimé.

Le dispositif 1 comprend aussi un actionneur 6 en verrouillage et en déverrouillage du bloqueur 5 dudit au moins un support 3. C'est cet actionneur 6 qui contrôle le déploiement du bloqueur 5 en verrouillage, et inversement. En somme, l'actionneur 6 a un rôle d'interrupteur assurant que le bloqueur 5 reçoit ou non de l'énergie pour se déployer ou se rétracter. Préférentiellement, quand l'actionneur 6 délivre l'énergie audit bloqueur 5, alors ce dernier assure le déverrouillage, tandis que si l'actionneur 6 ne délivre pas d'énergie, le bloqueur 5 se retrouve en verrouillage ; l'inverse est aussi envisageable.

Le dispositif 1 comprend donc aussi une alimentation 7 en énergie dudit actionneur 6. Cette alimentation 7 est connectée à l'actionneur 6 et approvisionne en énergie de façon continue ledit actionneur 6, qui délivre ou non l'énergie audit bloqueur 5 pour permettre le déverrouillage ou le verrouillage dudit bloqueur 5.

Préférentiellement, dans le cas d'une énergie hydraulique ou pneumatique, l'actionneur 6 peut comprendre une électrovanne.

Plus avant, lors du changement de format, il peut être nécessaire de déplacer un support 3 en le déverrouillant par rapport au rail 4, pour venir le repositionner à une nouvelle position, adaptée en fonction du nouveau format à produire.

Pour ce faire, le dispositif 1 comprend encore au moins un organe 8 d'accouplement avec ledit au moins un support 3. C'est cet organe 8 qui est rendu solidaire temporairement de chaque support 3, pour venir le déplacer lorsqu'il est en déverrouillage, avant que ledit support 3 ne soit replacé dans la nouvelle position puis verrouillé à nouveau.

Avantageusement, ledit organe 8 embarque ledit actionneur 6, permettant d'alimenter en énergie ledit bloqueur 5. En somme, l'actionneur 6 est monté sur l'organe 8 et relié à l'alimentation 7 en énergie, alors que le bloqueur 5 se retrouve non alimenté, sauf par l'intermédiaire dudit organe 8. Dès lors, en termes d'alimentation en énergie, le bloqueur 5 se retrouve passif et c'est l'organe 8 qui devient actif, asservissant en tant que maître, le bloqueur 5 devenu esclave. Une telle configuration permet notamment de ne plus relier chacun des bloqueurs 5, mais uniquement l'organe 8 à l'alimentation 7, simplifiant considérablement la conception, la fabrication, le montage et le câblage, en particulier dans le cas de nombreux supports 3 à alimenter. En outre, l'alimentation de chaque bloqueur 5 dépend de l'organe 8 et les supports 3 ne peuvent être déplacés qu'un par un, chacun son tour sous l'action de l'organe 8 en accouplement. On notera que les prises en charge et les déplacements de chacun des supports 3 par l'organe 8 peuvent être déterminés selon une configuration adaptée. En particulier, des moyens logiciels permettent de gérer l'enregistrement des positions de chacun des supports 3 et des déplacements à opérer à chacun d'entre eux, en fonction du format de la production. En outre, une telle configuration assure la prise en charge d'un premier support 3 pour le déplacer à une nouvelle position, sans entrer en interférence avec un autre support 3 positionné à un autre endroit le long du rail 4. Il est ainsi possible d'ajuster la position de chaque support 3 et d'intervenir dans un ordre précis sur chacun d'entre eux, pour le repositionner correctement. Un tel fonctionnement permet notamment d'éviter des étapes de déplacements de tous les supports 3 vers une position d'extrémité dudit rail 4, avant de revenir les positionner un par un vers leur nouvelle position, induisant des longueurs et des temps de déplacements superflus.

Plus avant, le dispositif 1 comprend une motorisation 9 relative entre ledit organe 8 et ledit support 3. En d'autres termes, la motorisation 9 permet de déplacer l'organe 8 par rapport au support 3 ou bien de déplacer le support 3 par rapport à l'organe 8 alors fixe ; le terme « relatif » s'entend pour un déplacement selon la direction longitudinale entre le support 3 et l'organe 8.

Selon des modes de réalisation, comme visible sur les figures 1,2,5 et 7, le dispositif 1 comprend un guide 10 s'étendant parallèlement audit rail 4. De plus, ledit organe 8 est prévu mobile le long dudit guide 10 sous l'action de ladite motorisation 9. Dès lors, c'est le déplacement de l'organe 8 le long de son guide qui permet de se positionner pour récupérer chaque support 3 en vue de le déplacer et le repositionner dans sa nouvelle position.

Selon un mode de réalisation, ledit organe 8 s'apparente alors à un chariot, à l'instar du mode de réalisation correspondant dudit support 3.

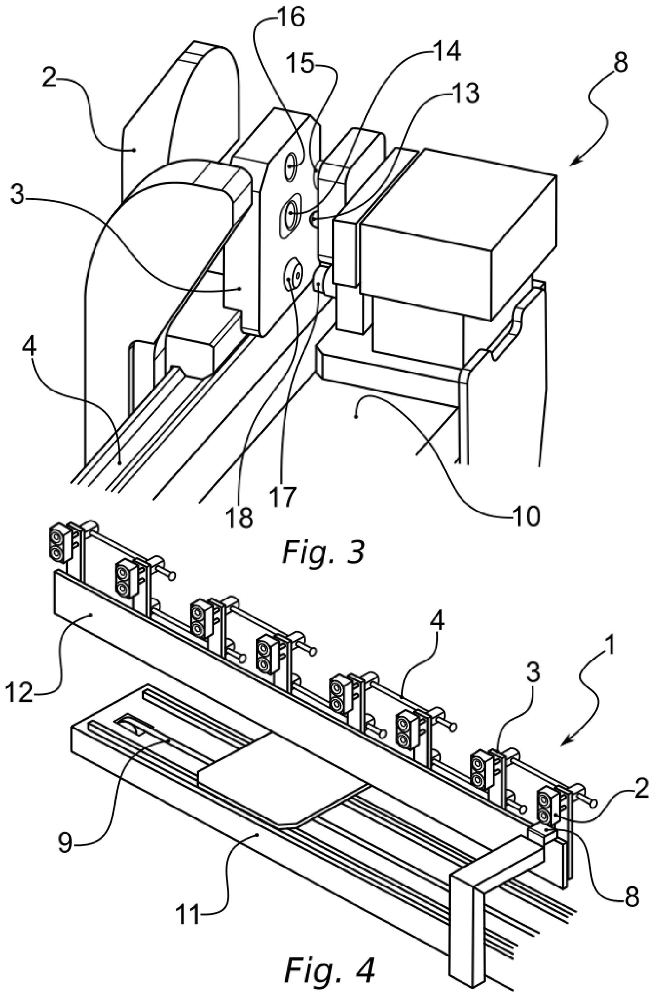

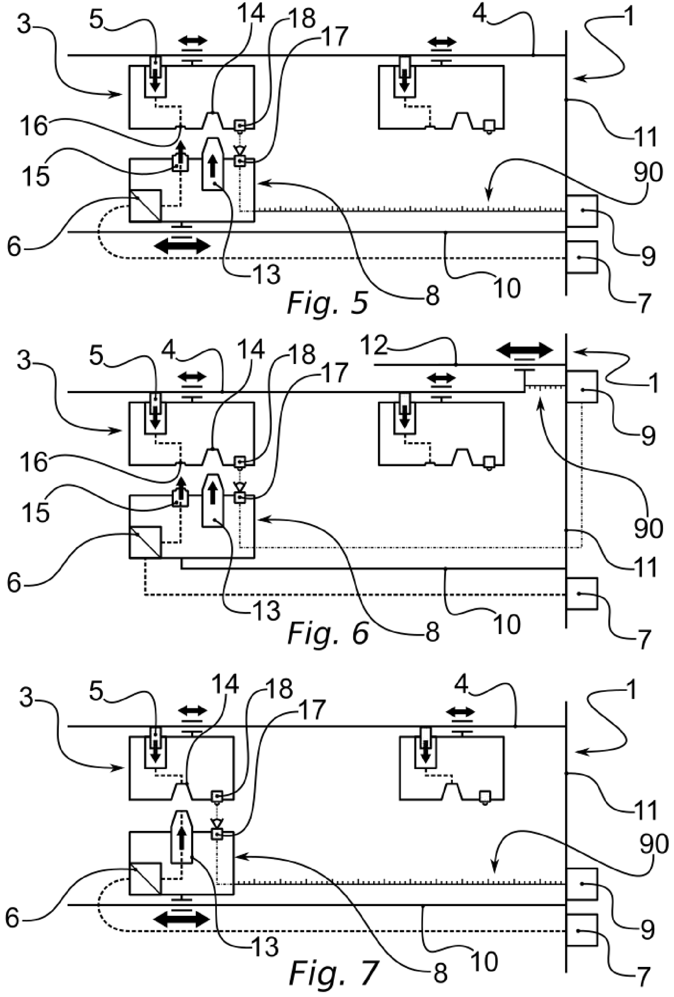

Selon d'autres modes de réalisation, comme visible sur les figures 4 et 6, le dispositif 1 comprend une structure 11 et un longeron 12. De plus, ledit rail 4 est monté mobile par rapport audit longeron 12 de ladite structure 11 sous l'action de ladite motorisation 9. En somme, ladite motorisation assure le déplacement dudit rail 4. Cette mobilité du longeron 12 s'effectue longitudinalement. De surcroît, ledit organe 8 est monté fixe sur ladite structure 11. Dès lors, c'est le déplacement du rail 4 le long du longeron 12 qui permet de positionner chaque support 3 en face de l'organe 8 pour accouplement puis de repositionner ledit support 3 après accouplement et en déverrouillage vers sa nouvelle position par déplacement dudit rail 4 par rapport à l'organe 8 qui ne bouge pas.

De plus, ladite motorisation 9 est prévue indexée par rapport audit rail 4. En somme, la motorisation 9 est contrôlée de manière à connaître avec exactitude la position de l'élément déplacé, que ce soit le rail 4 et le support 3 correspondant ou bien que ce soit l'organe 8. En d'autres termes, comme représenté sur les figures 5 à 7, la motorisation 9 présente un référentiel 90 par rapport à la structure 11, permettant de connaître la coordonnée longitudinale de chaque position. En particulier, l'indexation de la motorisation 9 est effectuée par rapport à un point de référence situé à une extrémité de la structure 11, préférentiellement à l'extrémité de jonction de ladite structure 11 avec ledit rail 4, ledit guide 10 ou ledit longeron 12.

Selon un mode de réalisation, la motorisation 9 indexée se présente sous forme d'au moins un servomoteur, notamment de type moteur asynchrone ou « sans balai » (pour « brushless »), ou bien de type moteur linéaire, et dans tous les cas avec un lecteur de position dit « codeur ».

Comme évoqué précédemment, l'organe 8 permet de prendre en charge chaque support 3, pour le repositionner. Cette prise en charge s'effectue par accouplement dudit organe 8 avec ledit support 3.

Selon un mode de réalisation, comme visible notamment sur la figure 3, ledit organe 8 comprend au moins un pion 13 d'accouplement. De plus, ledit support 3 comprend au moins un orifice 14 d'accouplement, ledit orifice 14 étant conformé complémentairement dudit pion 13. Ainsi, le pion 13 peut être inséré à l'intérieur de l'orifice 14 jusqu'à rendre solidaires le support 3 et l'organe 8, l'un ne pouvant être déplacé sans l'autre, ce uniquement sous l'action de ladite motorisation 9.

Par ailleurs, ledit pion 13 est prévu mobile depuis une configuration escamotée vers une position déployée, et inversement, notamment par l'intermédiaire d'un contrôleur dédié.

Selon un mode de réalisation, ledit pion 13 est conformé de façon conique, assurant le centrage par rapport aux parois internes dudit orifice 14 lors de l'accouplement. De façon complémentaire, l'orifice 14 comprend alors des parois convergentes depuis l'extérieur vers l'intérieur selon le sens d'insertion dudit pion 13, à savoir transversalement. Ainsi, si le support 3 et l'organe 8 ne sont pas parfaitement alignés transversalement au moment de l'accouplement, la forme spécifique du pion 13 permet d'assurer le centrage au moment de l'introduction du pion 13 au sein dudit orifice14. Dès lors, le centrage par le pion 13 coopérant au sein de l'orifice 14 assure essentiellement un centrage selon la direction longitudinale, ces éléments étant situés à des hauteurs fixes par rapport au rail 4 et au guide 10.

En outre, au moment de l'accouplement, on peut rendre libre ledit positionnement dudit organe 8 par rapport audit support 3, ou inversement, de manière à permettre une liberté de mouvement de l'un par rapport à l'autre, évitant une résistance provenant du verrouillage dudit support 3 sur son rail 4 au moment dudit accouplement. En d'autres termes, au moment de l'accouplement, dans le cas d'un organe 8 mobile, on rend libre le déplacement dudit organe 8 le long de son guide 10, tandis que dans le cas d'un organe 8 fixe, on rend libre le déplacement dudit support 3 en verrouillage sur le longeron 12, à savoir en laissant libre le déplacement longitudinal dudit longeron 12 par rapport à la structure 11.

Ensuite, après l'accouplement, on contrôle ledit déplacement dudit organe 8 solidaire dudit support 3, ou inversement. En d'autres termes, après accouplement, dans le cas d'un organe 8 mobile, on contrôle le déplacement dudit organe 8 le long de son guide 10, tandis que dans le cas d'un organe 8 fixe, on contrôle le déplacement dudit support 3 alors en déverrouillage le long du rail 4, à savoir en contrôlant le déplacement longitudinal dudit rail 4 par rapport au longeron 12 de la structure 11.

En outre, ces déplacements contrôlés s'effectuent par l'intermédiaire de la motorisation 9 indexée. Dès lors, si la liberté de mouvement lors de l'accouplement génère un déplacement même minime dudit organe 8 ou dudit support 3, l'indexation de la motorisation 9 permet de corriger cet éventuel intervalle.

Par ailleurs, l'indexation de la motorisation 9 permet de connaître la position de chaque support 3 le long du rail 4, notamment une fois que chacun d'entre eux a été pris en charge une fois par l'organe 8, ou bien si cette position initiale de chaque support 3 a été enregistrée préalablement.

Selon un mode de réalisation, le dispositif 1 comprend des moyens de détection de chaque support 3 par l'organe 8. Une telle détection permet notamment de déterminer une première fois la position initiale de chaque support 3.

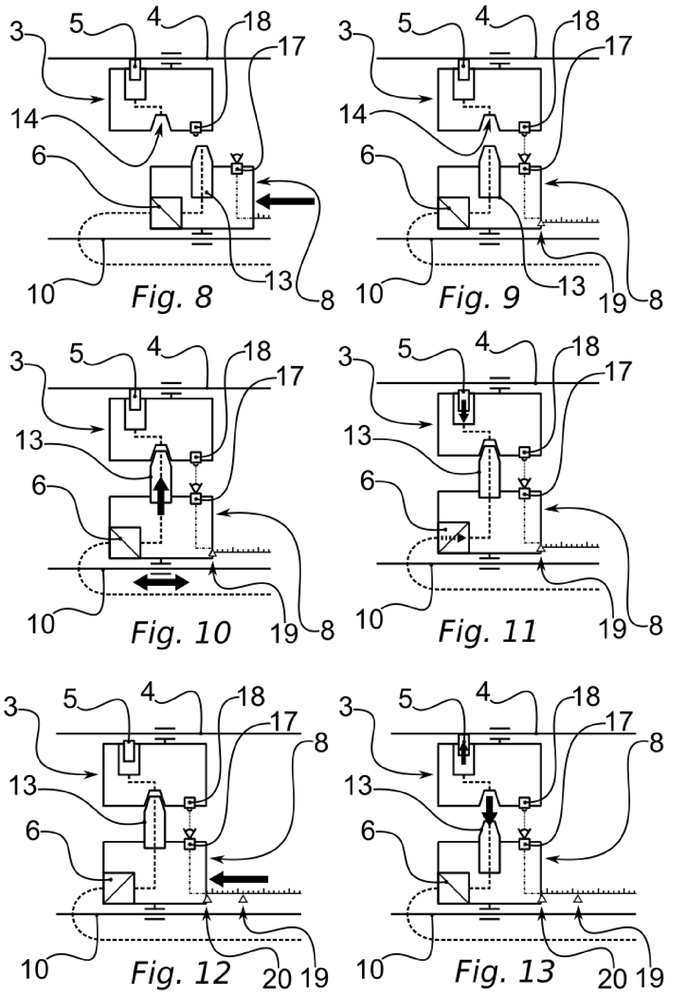

Selon un mode de réalisation, l'organe 8 est équipé d'une cellule 17 de détection, tandis que chaque support 3 est équipé d'un récepteur 18 correspondant et adapté. En outre, ladite cellule 17 et ledit récepteur 18 sont positionnés pour assurer la détection dudit récepteur 18 par la cellule 17, notamment transversalement, dans un plan horizontal ou sensiblement horizontal. Une telle détection est notamment visible sur la figure 9.

Plus avant, les moyens de détection sont reliés à la motorisation 9 indexée, de manière à arrêter le déplacement de l'organe 8 ou du support 3 au moment d'une détection avérée d'un récepteur 18 par la cellule 17.

De façon connexe, la détection peut comprendre des informations d'identification, permettant d'interpréter des données relatives au support 3, comme par exemple l'ordonnancement d'un support 3 le long du rail 4 par rapport aux autres supports 3 adjacents. Cette identification d'un support 3 permet de ne le prendre en charge que si la position finale dudit support 3 à déplacer n'entre pas en interférence avec un autre support 3 adjacent.

En outre, la gestion des déplacements des différents supports 3 peut être effectuée par l'intermédiaire de moyens logiciels adaptés, s'exécutant sur une console de commande et équipée de moyens informatiques adaptés. Une telle console assure notamment la gestion de la motorisation 9 indexée, ainsi que l'activation dudit actionneur 6.

Comme évoqué précédemment, l'alimentation 7 en énergie est reliée à l'organe 8, asservissant indépendamment le bloqueur 5 de chaque support 3.

Selon un mode de réalisation, ledit organe 8 comprend une connectique 15 reliée à ladite alimentation 7. De plus, le support 3 comprend une connectique 16 complémentaire reliée audit bloqueur 5. Dès lors, en position d'accouplement, la connectique 15 est reliée à ladite connectique 16 complémentaire, ladite alimentation 7 étant alors reliée audit bloqueur 5, notamment par l'intermédiaire dudit actionneur 6.

Selon différents modes de réalisation, en fonction du type d'alimentation, la connectique 15 et la connectique 16 complémentaire peuvent être des connecteurs électriques, comme des prises mâle et femelle, des raccords hydrauliques ou pneumatiques. En particulier, dans le cas de raccords, ces derniers sont équipés de moyens adaptés assurant l'étanchéité en accouplement.

Selon un mode de réalisation, comme visible sur les figures 5 et 6, la connectique 15 est distincte dudit pion 13.

Selon un autre mode de réalisation, comme visible sur la figure 7, ledit pion 13 comprend ladite connectique 15 et ledit orifice 14 comprend ladite connectique 16 complémentaire.

L'invention concerne aussi un procédé de traitement de produits, ci-après « procédé ». Un tel procédé est préférentiellement adapté pour la mise en œuvre du dispositif 1 de traitement précédemment décrit.

Ledit procédé comprend plusieurs étapes successives, non limitatives.

Tout d'abord, on effectue un déplacement longitudinal de façon relative entre un organe 8 et un support 3 d'un outil 2 dédié audit traitement desdits produits, en effectuant un positionnement en alignement transversal entre ledit organe 8 et ledit support 3.

En particulier, le déplacement relatif correspond au déplacement de l'organe 8 le long de son guide 10 par rapport au support 3 verrouillé sur le rail 4, ou bien du déplacement du longeron 12 sur lequel est verrouillé ledit support 3 par rapport à l'organe 8 fixe.

Selon un mode de réalisation, au cours du positionnement, on déplace ledit rail 4 par rapport audit organe 8 fixe.

Selon un autre mode de réalisation, au cours du positionnement, on déplace ledit organe 8 par rapport audit rail 4 fixe.

Ensuite, on effectue alors un accouplement dudit organe 8 avec ledit support 3. Ensuite, on effectue un actionnement depuis ledit organe 8 du déverrouillage d'un bloqueur 5 dudit support 3, ledit support 3 étant situé en une position 19 initiale le long d'un rail 4.

En accouplement, on effectue un déplacement de façon indexée dudit support 3 en coulissement le long dudit rail 4 depuis ladite position 19 initiale vers une position 20 finale.

Une fois en position 20 finale, on effectue l'actionnement du verrouillage dudit bloqueur 5 depuis ledit organe 8.

Ensuite, on désaccouple ledit organe 8.

Ces étapes peuvent être répétées, en particulier pour la prise en charge successive de plusieurs supports 3.

Certaines de ces étapes sont mises en évidence sur les figures 8 à 13.

Selon un mode de réalisation, en accouplement, on contrôle l'actionnement du verrouillage et du déverrouillage dudit bloqueur 5 par alimentation depuis ledit organe 8. Le bloqueur 5 se retrouve donc asservi à l'organe 8, en particulier par l'intermédiaire de son actionneur 6 relié à l'alimentation 7 en énergie.

Selon un mode de réalisation, au moment de l'accouplement, on rend libre ledit positionnement dudit organe 8 par rapport audit support 3, ou inversement. Cette liberté de mouvement permet, au moment de l'accouplement, d'éviter tout détérioration des éléments destinés à coopérer entre eux, du fait du verrouillage du support 3.

Une telle liberté de mouvement au moment de l'accouplement est notamment représentée sur la figure 10.

Plus précisément, dans le cas d'un organe 8 fixe, on rend libre le déplacement longitudinal du rail 4 par rapport au longeron 12, tandis que si le rail 4 est fixe, on rend libre le déplacement longitudinal dudit organe 8 par rapport à son guide 10.

Ensuite, après l'accouplement, on contrôle ledit déplacement dudit organe 8 solidaire dudit support 3, ou inversement.

En outre, la liberté de mouvement et le contrôle du déplacement susmentionnés sont assurés par la motorisation 9 indexée.

Selon un mode de réalisation, le positionnement en alignement transversal entre ledit organe 8 et ledit support 3 s'effectue par détection d'au moins un récepteur 18 monté sur ledit support 3.

En outre, une telle détection est opérée par une cellule 17 montée sur l'organe 8.

Une telle étape de détection est notamment visible sur la figure 9. Cette détection permet de déterminer le « vis-à-vis » entre l'organe 8 et le support 3 à prendre en charge, à savoir que ces éléments se trouvent bien en alignement transversal, notamment avec le pion 13 et l'orifice 14 situés au même niveau selon la direction longitudinale.

De plus, une telle détection permet d'obtenir les positions réelles de tous les supports 3, pour vérifier et éventuellement corriger un positionnement initial lors du montage. Cette détection peut aussi être effectuée à chaque changement de format de production, mais préférentiellement couplée à un enregistrement des positions de chaque support 3, en vue d'utiliser ces positions connues ultérieurement lors du prochain changement de format de production.

Ainsi, l'invention permet, au travers du déport de l'alimentation vers l'organe 8, de simplifier considérablement le montage du dispositif 1, avec un asservissement à l'unité du bloqueur 5 de chacun des supports 3 à déplacer lors d'un changement de format de production.

De plus, l'invention permet d'opérer les déplacements de chaque support 3 de façon optimisée, par décalage entre la position 19 initiale et la position 20 finale, dans un ordre précis, en prenant en compte les interférences entre les supports 3 adjacents.

## Revendications

1. Dispositif (1) de traitement de produits, comprenant
- au moins un outil (2) et au moins un support (3) déplaçable, ledit outil (2) étant monté sur ledit support (3) et ledit au moins un outil (2) est dédié audit traitement desdits produits ;
- au moins un rail (4), chaque support (3) étant monté en coulissement le long dudit rail (4) entre plusieurs positions ;
chaque support (3) comprenant un bloqueur (5) en une des positions, ledit bloqueur (5) étant actionnable depuis un verrouillage dudit support (3) en appui contre ledit rail (4) vers un déverrouillage autorisant le déplacement dudit support (3) le long dudit rail (4), et inversement ;
- un actionneur (6) en verrouillage et en déverrouillage du bloqueur (5) dudit au moins un support (3) ;
- une alimentation (7) en énergie dudit actionneur (6);
ledit dispositif (1) de traitement comprenant encore
- au moins un organe (8) d'accouplement avec ledit au moins un support (3) ;
- une motorisation (9) relative entre ledit organe (8) et ledit au moins un support (3), ladite motorisation (9) étant prévue indexée par rapport audit rail (4);
**caractérisé en ce que**
- ledit organe (8) embarque ledit actionneur (6), permettant d'alimenter en énergie ledit bloqueur (5).

2. Dispositif (1) de traitement selon la revendication précédente, **caractérisé en ce qu'**il comprend
- un guide (10) s'étendant parallèlement audit rail (4) ;
- ledit organe (8) étant prévu mobile le long dudit guide (10) sous l'action de ladite motorisation (9).

3. Dispositif (1) de traitement selon l'une quelconque des revendications précédentes, **caractérisé en ce qu'**il comprend
- une structure (11) et un longeron (12) ;
- ledit rail (4) est monté mobile par rapport audit longeron (12) de ladite structure (11) sous l'action de ladite motorisation (9) assurant le déplacement dudit rail (4) ;
et **en ce que**
- ledit organe (8) est monté fixe sur ladite structure (11).

4. Dispositif (1) de traitement selon l'une quelconque des revendications précédentes, **caractérisé en ce que**
- ledit organe (8) comprend au moins un pion (13) d'accouplement, ledit pion (13) étant mobile depuis une configuration escamotée vers une position déployée, et inversement ;
- ledit support (3) comprend au moins un orifice (14) d'accouplement, ledit orifice (14) étant conformé complémentairement audit pion (13) ;
- en position déployée, ledit pion (13) coopérant avec ledit orifice (14) en accouplement dudit organe (8) avec ledit support (3).

5. Dispositif (1) de traitement selon l'une quelconque des revendications précédentes, **caractérisé en ce que**
- ledit organe (8) comprend une connectique (15) reliée à ladite alimentation (7) ;
- ledit support (3) comprend une connectique (16) complémentaire reliée audit bloqueur (5) ;
- en position d'accouplement, la connectique (15) est reliée à ladite connectique (16) complémentaire, ladite alimentation (7) étant alors reliée audit bloqueur (5).

6. Dispositif (1) de traitement selon l'une quelconque des revendications 4 ou 5, **caractérisé en ce que**
- ledit pion (13) est conformé de façon conique, assurant le centrage par rapport aux parois internes dudit orifice (14) lors de l'accouplement.

7. Dispositif (1) de traitement selon l'une des revendications 5 ou 6, **caractérisé en ce que**
- ledit pion (13) comprend ladite connectique (15) et ledit orifice (14) comprend ladite connectique (16) complémentaire.

8. Dispositif (1) de traitement selon l'une quelconque des revendications précédentes, **caractérisé en ce que**
- ledit au moins un outil (2) est un poinçon, ledit dispositif (1) de traitement assurant le formage à partir d'une feuille cartonnée desdits produits de type conteneur ;
ou
- ledit au moins un outil (2) est un moyen de préhension des produits de type récipient, ledit dispositif (1) de traitement assurant le transfert, l'encaissage ou le décaissage desdits produits ;
ou
- ledit au moins un outil (2) est un moyen de préhension de conteneurs par maintien en appui par dépression contre une paroi de chacun desdits conteneurs, ledit dispositif (1) de traitement assurant le convoyage desdits conteneurs ; ou
- ledit au moins un outil (2) est un convoyeur, ledit dispositif (1) de traitement assurant le convoyage desdits produits ;
ou
- ledit au moins un outil (2) est une paroi de couloir, ledit dispositif (1) de traitement assurant le convoyage en couloirs desdits produits de type récipient ou de type conteneur.

9. Procédé de traitement de produits, dans lequel successivement
- on effectue un déplacement longitudinal de façon relative entre un organe (8) et un support (3) d'un outil (2) dédié audit traitement desdits produits, en effectuant un positionnement en alignement transversal entre ledit organe (8) et ledit support (3) ;
- on effectue un accouplement dudit organe (8) avec ledit support (3) ;
- on effectue un actionnement depuis ledit organe (8) du déverrouillage d'un bloqueur (5) dudit support (3), ledit support (3) étant situé en une position initiale le long d'un rail (4) ;
- en accouplement, on effectue un déplacement de façon indexée dudit support (3) en coulissement le long dudit rail (4) depuis ladite position initiale vers une position finale ;
- en position finale, on effectue l'actionnement du verrouillage dudit bloqueur (5) depuis ledit organe (8) ;
- on désaccouple ledit organe (8).

10. Procédé de traitement selon la revendication précédente, **caractérisé en ce que**
- en accouplement, on contrôle l'actionnement du verrouillage et du déverrouillage dudit bloqueur (5) par alimentation depuis ledit organe (8).

11. Procédé de traitement selon l'une quelconque des revendications 9 ou 10, **caractérisé en ce que**
- au moment de l'accouplement, on rend libre ledit positionnement dudit organe (8) par rapport audit support (3), ou inversement ;
- puis, après l'accouplement, on contrôle ledit déplacement dudit organe (8) solidaire dudit support (3), ou inversement.

12. Procédé de traitement selon l'une quelconque des revendications 9 à 11, **caractérisé en ce que**
- le positionnement en alignement transversal entre ledit organe (8) et ledit support (3) s'effectue par détection d'au moins un récepteur (18) monté sur ledit support (3).

13. Procédé de traitement selon l'une quelconque des revendications 9 à 12, **caractérisé en ce que**
- au cours du positionnement, on déplace ledit rail (4) par rapport audit organe (8) fixe.

14. Procédé de traitement selon l'une quelconque des revendications 9 à 12, **caractérisé en ce que**
- au cours du positionnement, on déplace ledit organe (8) par rapport audit rail (4) fixe.
